# EUROPEAN PATENT SPECIFICATION

(11) **EP 0 745 751 B1**
(45) Date of publication and mention of the grant of the patent: **08.09.1999**
(21) Application number: 96303959.9
(22) Date of filing: 31.05.1996
(51) Int. Cl.: B29C 47/00, E06B 5/16

(54) **Intumescent strip**
Aufschwellender Streifen
Ruban intumescent

(30) Priority: 02.06.1995 GB 9511146; 26.04.1996 GB 9608682
(43) Date of publication of application: 04.12.1996
(73) Proprietor: Reddiplex Group PLC, Droitwich, Worcestershire, WR9 9BG (GB)
(72) Inventor: Boot, Peter Lawrence, Grafton Flyford, Worcestershire, WR7 4PH (GB)
(74) Representative: Makovski, Priscilla Mary

(56) References cited:
- EP-A- 0 344 964
- EP-A- 0 509 701
- DE-A- 3 019 507
- GB-A- 2 079 669
- GB-A- 2 202 484
- GB-A- 2 222 194

## Description

This invention relates to a method of making an intumescent strip comprising an elongate carrier defining an internal cavity containing an elongate insert of intumescent material.

Such intumescent strips are used for fireproofing doors and the like. The strip is mounted in a channel in the door or frame, so that its outer surface is flush with the outer surface of the door or frame. When the strip reaches a predetermined temperature, between 120°C and 180°C, which will only occur if there is a fire, the intumescent material expands and develops pressure so that it seals against the frame or door, closing the gap between the door and the frame, which helps to contain the fire. The strip may also include an elongate weatherstrip which normally seals the gap and acts as a smoke stop, but is destroyed by fire. The weatherstrip is carried in a channel formed on the outer surface of the carrier.

These intumescent strips are made by forming the carrier as an extrusion of plastics material, cutting it into lengths, and then feeding the elongate insert into the cavity in a separate operation, often by hand, from one end of the length of the carrier. With some intumescent materials the ends of the carrier must then be plugged to prevent the ingress of moisture. Any weatherstrip is inserted into its channel by sliding, as another separate operation. The intumescent strip is therefore difficult and time consuming to assemble, as the assembly has to be done in several separate operations because of the nature of the intumescent material.

GB-A-2 079 669 shows another method of making the intumescent strip by extruding an intumescent insert and then covering it by an extruded cover of PVC. The two components can be extruded from separated die heads, or from separate dies in a single die head. In the latter case heat insulation material must be provided between the dies to protect the intumescent material.

According to the present invention, a method of making an intumescent strip comprises extruding from molten plastics material an elongate carrier defining an internal cavity, then extruding an elongate insert of flexible intumescent material into the cavity, and cooling the extruded components to form a solid carrier with the intumescent material in the cavity.

Extrusion of the carrier and the insert eliminates the subsequent assembly of these items, thus simplifying manufacture considerably. The only assembly step needed is insertion of any weatherstrip required.

Preferably the intumescent insert is co-extruded with the carrier into the cavity. Alternatively the intumescent insert may be extruded into the cavity after extrusion of the extruded carrier.

This method of manufacture requires careful control, as the processing temperature of the plastics material for the carrier will normally be very close to the expansion temperature of the intumescent material. The relative processing temperatures of the carrier and the insert during extrusion and subsequent cooling must therefore be controlled to ensure that the intumescent material does not reach its expansion temperature.

Preferably therefore the method comprises extruding the carrier at a relatively high temperature, extruding the insert into the cavity at a lower temperature, and passing the extrusion through a cooled former. As the insert is extruded at a low temperature and the cooled former cools the outside of the carrier rapidly, the insert does not reach its expansion temperature. After passage through the cooled former, the extruded components may pass through further cooling means if necessary. The further cooling means may be a water tank.

The insert may be extruded into the cavity from one side. For the co-extrusion method, the carrier may be extruded from one side.

Where the insert is extruded after the carrier, the method may comprise extruding the carrier at a relatively high temperature, cooling the carrier, extruding the insert into the cavity at a lower temperature, and cooling the extruded components. This also ensures that the insert does not reach its expansion temperature. The carrier may be cooled by passing it through a cooled former, and a further cooling means if necessary.

It will be appreciated that the materials may be extruded using any conventional method, where the material is forced through a die by an extruder screw or a pump.

The carrier is preferably of rigid PVC (polyvinylchloride), but may be of a flexible plastics. Where the co-extrusion method is used, the carrier may be of hollow, closed box-like construction. Where the subsequent extrusion method is used the carrier may be of hollow box-like construction with an opening in one side through which the intumescent material is introduced. One side of the external surface may have a channel for receiving a weatherstrip.

The intumescent material may be any suitable extrudable material, such as formulations with graphite.

Two embodiments of the invention are illustrated by way of example in the accompanying drawings, in which:-
**Figure 1** shows a cross-section through an intumescent strip made by the co-extrusion method;
**Figure 2** shows apparatus for making the strip of Figure 1 in accordance with the method of the invention;
**Figure 3** shows a cross-section through an intumescent strip made by the subsequent extrusion method;
**Figure 4** shows apparatus for making the strip of Figure 3 in accordance with the method of the invention; and
**Figure 5** shows an enlarged detail of the nozzle of Figure 4.

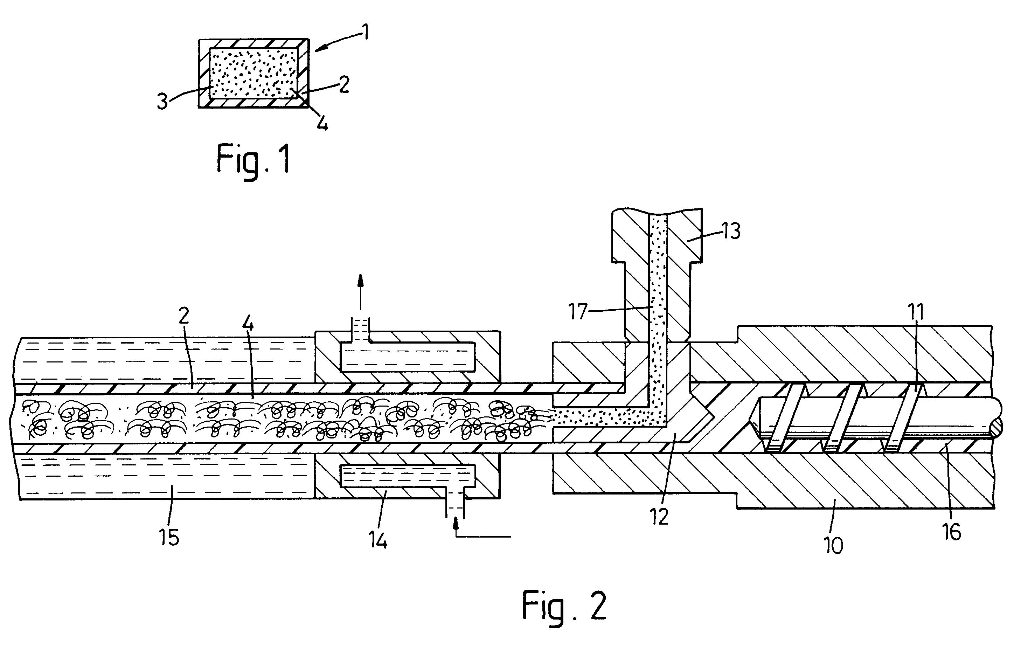

Figure 1 shows a cross-section through an elongate intumescent strip 1 comprising an elongate carrier 2 defining an internal cavity 3 for an elongate insert 4 of intumescent material. The carrier 2 is of hollow closed construction, with a rectangular cross-section and is of rigid PVC (polyvinylchloride). The insert 4 is a flexible, extrudable intumescent material based on graphite designed to expand at a temperature of about 170°C.

The strip 1 is made by a co-extrusion process using the apparatus of Figure 2. This apparatus comprises a first extruder 10 for high temperature PVC. Rotation of the extruder screw 11 transports molten PVC to a die 12. A second extruder 13 for lower temperature intumescent material feeds into the centre of the die 12 from the upper side. There is then a former 14 through which cold water (at about 8°C) flows for cooling, and a water tank 15 with water at about 13°C for further cooling.

In operation molten PVC 16 at a temperature of about 165°C is fed continuously to the die 12 by the extruder screw 11. The die 12 forms the PVC into a rectangular box carrier with an internal cavity, into which the intumescent material 17 at a lower temperature, not exceeding 100°C, is fed from the second extruder 13. The PVC and intumescent material form a co-extrusion, which is fed through the water-cooled former 14. This cools the outer surface of the PVC rapidly, and ensures it maintains its rectangular shape as it solidifies. In the former 14 there is a large temperature differential between the PVC and the former 14, and a smaller temperature differential between the PVC and the intumescent material. There is a relatively small amount of PVC, so as it cools, most of the heat is removed by the former 14, and only a little is conducted to the intumescent material, which ensures that this does not reach its expansion temperature. After the former 14 the co-extrusion passes through the water tank 15, which completes the cooling process. The co-extrusion then forms the strip 1, with the solid PVC carrier 2, and the intumescent insert 4 in the cavity 3. It will be appreciated that different forms of cooling would be possible, as long as the cooling process is controlled adequately.

In a modification, not shown, the PVC may be extruded from the second extruder 13, so that the PVC is fed from the side, while the intumescent material is fed from the first extruder 10 centrally into the cavity 3.

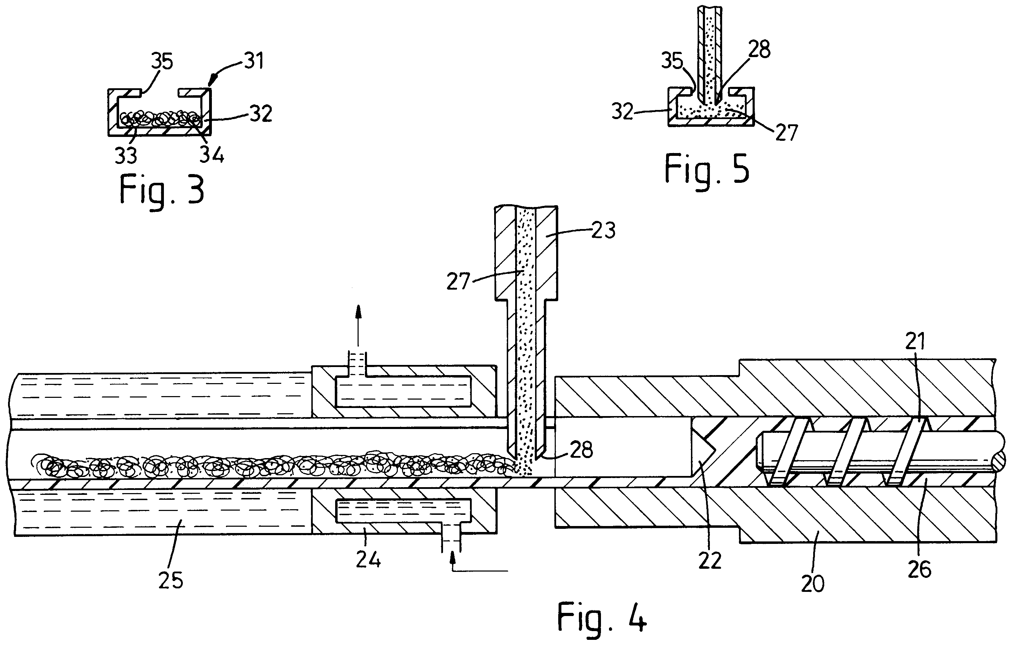

Figure 3 shows a cross-section through an intumescent strip 31 which is identical to that of Figure 1 except that the carrier 32 is of hollow box-like construction with an opening 35 in one side through which the insert 34 of intumescent material is introduced.

In the second embodiment of the invention the strip 31 is made by the process of extruding the carrier and subsequently extruding the intumescent material into the cavity using the apparatus in Figure 3. This apparatus comprises a first extruder 20 for high temperature PVC. Rotation of the extruder screw 21 transports molten PVC to a die 22. A second extruder 23 for lower temperature intumescent material has a nozzle 28 through which the intumescent material is fed through the opening 35 into the cavity of the extruded box-like shaped carrier 32. There is then a former 24 and water tank 25 (operating identically to the former 14 and tank 15 in the first embodiment).

In operation molten PVC 26 at a temperature of about 165°C is fed continuously into the die 22 by the extruder screw 21. The die 22 forms the PVC into a rectangular open box-like shaped carrier 32 with an integral cavity 33 into which intumescent material 27 is subsequently fed at a lower temperature, not exceeding 100°C, by inserting the nozzle 28 into the cavity through the opening 35 in the top side of the carrier 32. The PVC and the intumescent material form an extrusion which is cooled in an identical way to the first embodiment, using the former 24 and water tank 25.

Alternatively, the nozzle 28 may be positioned after the former 24 and water tank 25, so that the intumescent material 27 is extruded when the carrier 32 is substantially fully formed. The intumescent insert 34 is then allowed to cool naturally. This ensures that the intumescent material does not reach its expansion temperature.

In either embodiment different materials may be used for the carrier and the intumescent material. In particular, the carrier may be of flexible plastics material. The intumescent material may be extruded at a temperature closer to its expansion temperature, which for graphite materials may be up to 140°C, provided that the strip is cooled sufficiently rapidly in the former 14, 24 to ensure that the expansion temperature is not reached.

In either embodiment the materials may be fed to the dies by a pump instead of a screw.

The strip 1, 31 can be cut to length as required. In a modification (not shown) one side of the carrier 2, 32 is formed externally with a channel for receiving a weatherstrip. In this case, the strip 1, 31 is completed by sliding the weatherstrip into the channel.

The strip 1, 31 is designed to be used for fireproofing doors and the like. The strip 1, 31 is mounted in a groove in the door frame, so that its outer surface is flush with the surface of the door frame. When the strip 1, 31 is heated to the expansion temperature, as would happen in a fire, the PVC softens, and the intumescent insert 4, 34 expands and seals against the door, closing the gap between the door and the frame, so helping to contain the fire.

## Claims

1. A method of making an intumescent strip (1, 31) comprising extruding from molten plastics material an elongate carrier (2, 32) defining an internal cavity (3, 33), then extruding an elongate insert (4, 34) of flexible intumescent material into the cavity (3, 33), and cooling the extruded components to form a solid carrier with the intumescent material in the cavity (3, 33).

2. A method of making an intumescent strip as claimed in Claim 1, in which the intumescent insert (4) is co-extruded with the carrier (2) into the cavity (3).

3. A method of making an intumescent strip as claimed in Claim 1, in which the intumescent insert (34) is extruded into the cavity (33) after extrusion of the carrier (32).

4. A method of making an intumescent strip as claimed in any preceding claim, comprising extruding the carrier (2; 32) at a relatively high temperature, extruding the insert (4, 34) into the cavity (3, 33) at a lower temperature, and passing the extruded components through a cooled former (14, 24).

5. A method of making an intumescent strip as claimed in Claim 4, in which, after passing through the cooled former (14, 24), the extruded components pass through further cooling means (15, 25).

6. A method of making an intumescent strip as claimed in Claim 5, in which the further cooling means comprises a water tank (15, 25).

7. A method of making an intumescent strip as claimed in any preceding claim, in which the insert (4, 34) is extruded into the cavity (3, 33) from one side.

8. A method of making an intumescent strip as claimed in any of claims 2 or 4 to 6, in which the carrier (32) is extruded from one side.

9. A method of making an intumescent strip as claimed in Claim 3, comprising extruding the carrier (32) at a relatively high temperature, cooling the carrier, extruding the insert (34) into the cavity (33) from one side at a lower temperature, and cooling the extruded components.

10. A method of making an intumescent strip as claimed in Claim 9, in which the carrier is cooled by passing it through a cooled former (24).

11. A method of making an intumescent strip as claimed in Claim 10, in which, after passage through the cooled former (24), the carrier passes through further cooling means (25).

12. A method of making an intumescent strip as claimed in any of Claims 1, 2 or 4 to 6 or 8, in which the carrier (2) is of hollow, closed box-like construction.

13. A method of making an intumescent strip as claimed in any of claims 1 to 11, in which the carrier (32) is of hollow box-like construction with an opening in one side.

14. A method of making an intumescent strip as claimed in any preceding claim, in which the carrier is of rigid PVC.

15. A method of making an intumescent strip as claimed in any of claims 1 to 13, in which the carrier is of flexible plastics material

## Patentansprüche

1. Verfahren für die Herstellung eines aufschwellenden Streifens (1, 31) durch Strangpressen eines längsförmigen Trägers (2, 32) mit einem inneren Hohlraum (3, 33) aus geschmolzenem Kunststoff, und anschließendem Extrudieren eines längsförmigen Einsatzes aus einem flexiblen aufschwellenden Material in den Hohlraum (3, 33) und Abkühlen der extrudierten Komponenten, um mit dem in dem Hohlraum (3, 33) enthaltenen aufschwellenden Material einen stabilen Träger herzustellen.

2. Verfahren für die Herstellung eines aufschwellenden Streifens nach Anspruch 1, bei dem der aufschwellende Einsatz (4) zusammen mit dem Träger (2) in den Hohlraum (3) extrudiert wird.

3. Verfahren für die Herstellung eines aufschwellenden Streifens nach Anspruch 1, bei dem der aufschwellende Einsatz (34) nach dem Strangpressen des Trägers (32) in den Hohlraum (33) extrudiert wird.

4. Verfahren für die Herstellung eines aufschwellenden Streifens nach einem der vorausgegangenen Ansprüche, bei dem der Träger (2, 32) mit einer relativ hohen Temperatur extrudiert und der Einsatz (4, 34) in den Hohlraum (3, 33) mit einer niedrigeren Temperatur extrudiert wird und die extrudierten Komponenten durch eine gekühlte Formvorrichtung (14, 24) geleitet werden.

5. Verfahren für die Herstellung eines aufschwellenden Streifens nach Anspruch 4, bei dem nach Durchqueren der gekühlten Formvorrichtung (14, 24) die extrudierten Komponenten durch eine weitere Kühlvorrichtung (15, 25) geleitet werden.

6. Verfahren für die Herstellung eines aufschwellenden Streifens nach Anspruch 5, bei dem die weiteren Kühlvorrichtungen einen Wassertank (15, 25) enthalten.

7. Verfahren für die Herstellung eines aufschwellenden Streifens nach einem der vorausgegangenen Ansprüche, bei dem der Einsatz (4, 34) von einer Seite in den Hohlraum (3, 33) extrudiert wird.

8. Verfahren für die Herstellung eines aufschwellenden Streifens nach einem der Ansprüche 2 oder 4 bis 6, bei dem der Träger (32) von einer Seite extrudiert wird.

9. Verfahren für die Herstellung eines aufschwellenden Streifens nach Anspruch 3, bei dem der Träger (32) bei einer relativ hohen Temperatur extrudiert und der Träger abgekühlt wird und der Einsatz (34) in den Hohlraum (33) von einer Seite bei einer niedrigeren Temperatur extrudiert wird und die extrudierten Komponenten anschließend abgekühlt werden.

10. Verfahren für die Herstellung eines aufschwellenden Streifens nach Anspruch 9, bei dem der Träger dadurch abgekühlt wird, daß er durch eine gekühlte Formvorrichtung (24) geleitet wird.

11. Verfahren für die Herstellung eines aufschwellenden Streifens nach Anspruch 10, bei dem der Träger nach Durchlaufen der gekühlten Formvorrichtung (24) weitere Kühlvorrichtungen (25) durchläüft.

12. Verfahren für die Herstellung eines aufschwellenden Streifens nach einem der Ansprüche 1, 2 oder 4 bis 6 oder 8, bei dem der Träger (2) ein hohle geschlossene kastenartige Struktur bildet.

13. Verfahren für die Herstellung eines aufschwellenden Streifens nach einem der Ansprüche 1 bis 11, bei dem der Träger (32) eine hohle kastenartige Struktur mit einer Öffnung in einer seiner Seiten hat

14. Verfahren für die Herstellung eines aufschwellenden Streifens nach einem der vorausgegangenen Ansprüche, bei dem der Träger aus einem steifen PVC hergestellt ist.

15. Verfahren für die Herstellung eines aufschwellenden Streifens nach einem der Ansprüche 1 bis 13, bei dem der Träger aus einem flexiblen Kunststoff besteht.

## Revendications

1. Procédé de fabrication d'une bande intumescente (1, 31) consistant à extruder à partir d'une matière plastique fondue un support allongé (2, 32) définissant une cavité intérieure (3, 33) puis à extruder un élément rapporté allongé (4, 34) constitué d'un matériau intumescent souple, à l'intérieur de la cavité (3, 33), et à refroidir les composants extrudés pour former un support solide, le matériau intumescent étant dans la cavité (3, 33).

2. Procédé de fabrication d'une bande intumescente selon la revendication 1, dans lequel l'élément rapporté intumescent (4) est co-extrudé avec le support (2) dans la cavité (3).

3. Procédé de fabrication d'une bande intumescente selon la revendication 1, dans lequel l'élément rapporté intumescent (34) est extrudé dans la cavité (33) après extrusion du support (32).

4. Procédé de fabrication d'une bande intumescente selon l'une quelconque des revendications précédentes, consistant à extruder le support (2 ; 32) à une température relativement élevée, à extruder l'élément rapporté (4, 34) dans la cavité (3, 33) à une température plus faible, et à faire passer les composants extrudés à travers un dispositif de mise en forme refroidi (14, 24).

5. Procédé de fabrication d'une bande intumescente selon la revendication 4, dans lequel, après avoir traversé le dispositif de mise en forme refroidi (14, 24> , les composants extrudés passent à travers d'autres moyens de refroidissement (15, 25).

6. Procédé de fabrication d'une bande intumescente selon la revendication 5, dans lequel les autres moyens de refroidissement sont constitués d'un réservoir d'eau (15, 25).

7. Procédé de fabrication d'une bande intumescente selon l'une quelconque des revendications précédentes, dans lequel l'élément rapporté (4, 34) est extrudé dans la cavité (3, 33) à partir d'un côté.

8. Procédé de fabrication d'une bande intumescente selon l'une quelconque des revendications 2 ou 4 à 6, dans lequel le support (32) est extrudé à partir d'un côté.

9. Procédé de fabrication d'une bande intumescente selon la revendication 3, consistant à extruder le support (32) à une température relativement élevée, à refroidir le support, à extruder l'élément rapporté (34) dans la cavité (33) à partir d'un côté à une température inférieure, et à refroidir les composants extrudés.

10. Procédé de fabrication d'une bande intumescente selon la revendication 9, dans lequel le support est refroidi en le faisant passer à travers un dispositif de mise en forme refroidi (24).

11. Procédé de fabrication d'une bande intumescente selon la revendication 10, dans lequel, après passage à travers le dispositif de mise en forme refroidi (24), le support passe à travers d'autres moyens de refroidissement (25).

12. Procédé de fabrication d'une bande intumescente selon l'une quelconque des revendications 1, 2 ou 4 à 6 ou 8, dans lequel le support (2) a une structure analogue à un caisson fermé creux.

13. Procédé de fabrication d'une bande intumescente selon l'une quelconque des revendications 1 à 11, dans lequel le support (32) a une structure analogue à un caisson creux ayant une ouverture dans un côté.

14. Procédé de fabrication d'une bande intumescente selon l'une quelconque des revendications précédentes, dans lequel le support est constitué de PVC rigide.

15. Procédé de fabrication d'une bande intumescente selon l'une quelconque des revendications 1 à 13, dans lequel le support est constitué d'une matière plastique souple.
